(19) Europäisches Patentamt / European Patent Office / Office européen des brevets

(11) **EP 4 668 406 A1**

(12) **EUROPEAN PATENT APPLICATION**
published in accordance with Art. 153(4) EPC

(43) Date of publication:
**24.12.2025 Bulletin 2025/52**

(21) Application number: **24897993.2**

(22) Date of filing: **19.11.2024**

(51) International Patent Classification (IPC):
$H01M\ 10/0585^{(2010.01)}$    $H01M\ 4/66^{(2006.01)}$
$H01M\ 4/13^{(2010.01)}$    $H01M\ 4/38^{(2006.01)}$
$H01M\ 10/0525^{(2010.01)}$    $H01M\ 10/0562^{(2010.01)}$
$H01M\ 4/02^{(2006.01)}$

(52) Cooperative Patent Classification (CPC):
H01M 4/02; H01M 4/13; H01M 4/38; H01M 4/66;
H01M 10/0525; H01M 10/0562; H01M 10/0585;
Y02E 60/10

(86) International application number:
**PCT/KR2024/018282**

(87) International publication number:
**WO 2025/116397 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 KR 20230167861**

(71) Applicant: **LG Energy Solution, Ltd.
Seoul 07335 (KR)**

(72) Inventors:
• **LEE, Gyeongseop**
  **Daejeon 34122 (KR)**
• **WOO, Seunghe**
  **Daejeon 34122 (KR)**
• **KIM, Jeonggil**
  **Daejeon 34122 (KR)**
• **CHOI, Lak Young**
  **Daejeon 34122 (KR)**
• **LEE, Jaegil**
  **Daejeon 34122 (KR)**
• **AHN, Sanghyeok**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ALL-SOLID-STATE LITHIUM-ION SECONDARY BATTERY**

(57) Disclosed is an all-solid-state lithium-ion secondary battery in which a current collector contained in a lithium-free negative electrode is surface-treated with a lithium-friendly material, so that the surface-treated material induces a uniform lithium plating reaction on the current collector even during fast charging, thereby improving the performance. The all-solid-state lithium-ion secondary battery comprises a positive electrode, a solid electrolyte layer, a negative electrode current collector, and a negative electrode active material layer disposed between the solid electrolyte layer and the negative electrode current collector, wherein the negative electrode current collector comprises a base material; and a lithium-friendly layer located on a surface of the base material.

[Figure 3]

**Description**

[Technical Field]

This application claims the benefit of priority based on Korean Patent Application No. 10-2023-0167861, filed on November 28, 2023, and all the contents of which are incorporated herein as part of this specification.

The present invention relates to an all-solid-state lithium-ion secondary battery comprising a lithium-free negative electrode, and more particularly, to an all-solid-state lithium-ion secondary battery in which a current collector contained in a lithium-free negative electrode is surface-treated with a lithium-friendly material, so that the surface-treated material induces a uniform lithium plating reaction on the current collector even during fast charging, thereby improving the performance.

[Background Art]

Various batteries that can overcome the limitations of the lithium secondary battery, which is currently widely commercialized, in terms of the capacity, safety, output, large size, and miniaturization of the battery are being studied. Typically, there is continuous research in academia and industry on a metal-air battery which has a very large theoretical capacity in terms of capacity compared to the lithium secondary batteries, an all-solid-state battery with no risk of explosion in terms of safety compared to the lithium secondary batteries, a super capacitor in terms of output, a NaS battery or a redox flow battery (RFB) in terms of large size, a thin film battery in terms of miniaturization and the like.

Among them, the all-solid-state battery refers to a battery in which the liquid electrolyte used in the existing lithium secondary battery is replaced with a solid one, and since it does not use flammable solvents in the battery, and thus ignition or explosion due to the decomposition reaction of the conventional electrolyte solution does not occur at all, safety can be greatly improved. In addition, since the all-solid-state battery can use lithium metal or a lithium alloy as the negative electrode active material, there is an advantage that the energy density for the mass and volume of the battery can be dramatically improved. In addition, the capacity density (capacity per unit weight) of lithium is about 10 times that of graphite which is commonly used as a negative electrode active material. Therefore, if lithium is used as a negative electrode active material, it is possible to increase the output while thinning the all-solid-state battery.

As a typical all-solid-state battery, a battery is known that includes a metal layer formed of a metal that forms an alloy with lithium as a negative electrode active material layer, and has an interfacial layer made of amorphous carbon on the negative electrode active material layer. Also, in this type of all-solid-state battery, when charging, metallic lithium is deposited between the amorphous carbon interfacial layer and the negative electrode active material layer, and when discharging, the deposited metallic lithium is ionized and moves toward the positive electrode. However, when the all-solid-state battery as described above is repeatedly charged and discharged, the metallic lithium deposited between the amorphous carbon interfacial layer and the negative electrode active material layer is ionized and dissolved, which creates voids and thus can cause problems that make it unusable as a battery.

In order to solve such problems, an all-solid-state battery has been developed in the art, which consists of a negative electrode (i.e., a lithium-free negative electrode) comprising a carbon material except for a lithium metal layer. The negative electrode for these all-solid-state batteries does not contain lithium in the initial state or in the state after complete discharging, and when overcharged, lithium ions moving from the positive electrode are formed in the form of an alloy or compound between the negative electrode current collector and the solid electrolyte, and thus can play a role as a negative electrode active material (i.e., lithium metal is plated on the surface of the negative electrode current collector during charging).

However, in this case, there is a problem that the lithium plating reaction may occur unevenly depending on the location of the current collector even under the generally applied charging current, and thus there is a problem that the possibility of an internal short-circuit phenomenon occurring during operation of the battery is increased. In the art, in order to prevent this phenomenon, lithium-friendly materials such as silver (Ag), gold (Au), and silicon (Si) are incorporated to the negative electrode active material layer (excluding lithium metal). However, recently, as faster charging currents are required (i.e., the need for fast charging is increasing), an all-solid-state battery that meets this requirement is required, but it is difficult to achieve the goal by only applying the negative electrode active material layer containing the lithium-friendly material as mentioned above. Therefore, there is an urgent need to develop a novel all-solid-state battery that can solve the above-mentioned pressing challenges.

[Disclosure]

[Technical Problem ]

Therefore, it is an object of the present invention to provide an all-solid-state lithium-ion secondary battery wherein the current collector included in the lithium-free negative electrode is surface-treated with a lithium-friendly material, so that even during fast charging, the surface-treated material induces a uniform lithium plating reaction on the current collector, thereby improving the performance.

[Technical Solution ]

In order to achieve the above object, the present invention provides an all-solid-state lithium-ion secondary battery comprising a positive electrode, a solid electrolyte layer, a negative electrode current collector, and a negative electrode active material layer disposed between the solid electrolyte layer and the negative electrode current collector, wherein the negative electrode current collector comprises a base material; and a lithium-friendly layer disposed on a surface of the base material.

[Advantageous Effects ]

According to the all-solid-state lithium-ion secondary battery of the present invention, it has an advantage that the current collector included in the lithium-free negative electrode is surface-treated with a lithium-friendly material, so that the surface-treated material induces a uniform lithium plating reaction on the current collector even during fast charging, thereby improving the performance.

[Description of Drawings]

FIG. 1 is a cross-sectional schematic diagram showing the configuration of an all-solid-state lithium-ion secondary battery according to one embodiment of the present invention.
FIG. 2 is a cross-sectional schematic diagram showing the configuration of an all-solid-state lithium-ion secondary battery according to one embodiment of the present invention.
FIG. 3 is a side cross-sectional schematic diagram showing the laminated structures of a negative electrode current collector (a) included in a conventional anodeless all-solid-state battery and a negative electrode current collector (b) included in an all-solid-state battery according to an Example of the present invention.
FIG. 4 is a graph showing the capacity retention rates depending on the charging/discharging cycles of the batteries according to an Example of the present invention and a Comparative Example.

[Best Mode]

Hereinafter, the present invention will be described in detail.
The all-solid-state lithium-ion secondary battery according to the present invention comprises a positive electrode, a solid electrolyte layer, a negative electrode current collector, and a negative electrode active material layer disposed between the solid electrolyte layer and the negative electrode current collector, wherein the negative electrode current collector includes a base material and a lithium-friendly layer positioned on a surface of the base material.

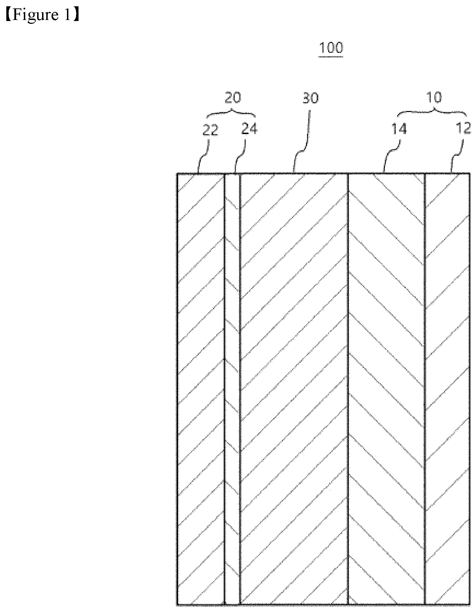

FIG. 1 is a cross-sectional schematic diagram showing the configuration of an all-solid-state lithium-ion secondary battery according to one embodiment of the present invention. The all-solid-state lithium-ion secondary battery 100 according to one embodiment of the present invention is a so-called lithium-ion secondary battery that performs charging and discharging by lithium ions moving between the positive electrode 10 and the negative electrode 20. Specifically, the all-solid-state lithium-ion secondary battery 100 is composed of the positive electrode 10, the negative electrode 20, and the solid electrolyte layer 30 arranged between the positive electrode 10 and the negative electrode 20, as shown in FIG. 1.
Below, each of these will be described, and in particular, the negative electrode 20, which is a key feature of the present invention, will be described in more detail.

(1) <u>Positive electrode</u>

As illustrated in FIG. 1, the positive electrode 10 comprises the positive electrode active material layer 14 and the positive electrode current collector 12 sequentially arranged in the direction of the negative electrode 20. The positive electrode current collector 12 may be in a plate shape or a foil shape. The positive electrode current collector 12 may be, for example, one type of metal selected from indium, copper, magnesium, stainless steel, titanium, iron, cobalt, nickel, zinc, aluminum, germanium, and lithium, or an alloy of two or more of these metals.
The positive electrode active material layer 14 can reversibly intercalate and de-intercalate lithium ions. In addition, the positive electrode active material layer 14 may comprise a positive electrode active material and may further comprise a solid electrolyte. The positive electrode active material may be a compound capable of intercalating/de-intercalating lithium. An example of the compound capable of intercalating/de-intercalating the lithium may be one represented by any one of $Li_aA_{1-b}B'_bD'_2$ (0.90≤a≤1.8, 0≤b≤0.5); $Li_aE_{1-b}B'_bO_{2-c}D'_c$ (0.90≤a≤1.8, 0≤b≤0.5, 0≤c≤0.05); $LiE_{2-b}B'_bO_{4-c}D'_c$ (0≤b≤0.5, 0≤c≤0.05); $Li_aNi_{l-b-c}Co_bB'_cD'_\alpha$ (0.90≤a≤1.8, 0≤b≤0.5, 0≤c≤0.05, 0<α≤2); $Li_aNi_{l-b-c}Co_bB'_cO_{2-\alpha}F'_\alpha$ (0.90≤a≤1.8, 0≤b≤0.5, 0≤c≤0.05, 0<α < 2); $Li_aNi_{l-b-c}Mn_bB'_cD'_\alpha$ (0.90≤a≤1.8, 0≤b≤0.5, 0≤c≤0.05, 0<α≤2); $Li_aNi_{1-b-c}Mn_bB'_cO_{2-\alpha}F'_\alpha$ (0.90≤a≤1.8, 0≤b≤0.5, 0≤c≤0.05, 0<α<2); $Li_aNi_bE_cG_dO_2$ (0.90≤a≤1.8, 0≤b≤0.9, 0≤c≤0.5, 0.001≤d≤0.1); $Li_aNi_bCo_cMn_dG_eO_2$ (0.90≤a≤1.8, 0≤b≤0.9, 0≤c≤0.5, 0≤d≤0.5, 0.001≤e≤0.1); $Li_aNiG_bO_2$ (0.90≤a≤1.8, 0.001≤b≤0.1); $Li_aCoG_bO_2$ (0.90≤a≤1.8, 0.001≤b≤0.1); $Li_aMnG_bO_2$ (0.90≤a≤1.8, 0.001≤b≤0.1); $Li_aMn_2G_bO_4$ (0.90≤a≤1.8, 0.001≤b≤0.1); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (0≤f≤2); $Li_{(3-f)}Fe_2(PO_4)_3$ (0≤f≤2); $LiFePO_4$.

In the above formulas, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; J is V, Cr, Mn, Co, Ni, Cu, or a combination thereof.

Specific examples of the positive electrode active material may be lithium salts such as lithium cobaltate (LCO), lithium nickelate, lithium nickel cobaltate, lithium nickel cobalt aluminate (NCA), and lithium nickel cobalt manganate (NCM), lithium manganate and lithium iron phosphate, and lithium sulfide. The positive electrode active material layer 14 may comprise only one or also two or more selected from these compounds as a positive electrode active material.

The positive electrode active material may comprise a lithium salt of a transition metal oxide having a layered rock salt-type structure among the lithium salts described above. Here, the layered rock salt-type structure means a structure in which oxygen atomic layers and metal atomic layers are alternately and regularly arranged in the direction of the cubic rock salt-type structure, and as a result, each atomic layer forms a two-dimensional plane. In addition, the cubic rock salt-type structure means a sodium chloride-type structure which is one kind of crystal structure. For example, the cubic rock salt-type structure refers to a structure in which face-centered cubic lattices formed by each of the positive ions and the negative ions are displaced from each other by 1/2 of the edge of the unit lattice.

The lithium salt of a transition metal oxide having such a layered rock salt-type structure may be, for example, a ternary lithium transition metal oxide such as $LiNi_xCo_yAl_zO_2$ (NCA) or $LiNi_xCo_yMn_zO_2$ (NCM) (wherein, 0 < x < 1, 0 < y < 1, 0 < z < 1, x + y + z = 1). The positive electrode active material layer 14 may improve energy density and thermal stability of the all-solid-state lithium-ion secondary battery 100 by comprising the lithium salt of the ternary transition metal oxide having such a layered rock salt-type structure as a positive electrode active material.

The shape of the positive electrode active material may be, for example, a particle shape such as a true spherical shape or an elliptical spherical shape. In addition, the particle diameter of the positive electrode active material is not particularly limited, and is possible if it is within a range applicable to the positive electrode active material of a typical all-solid-state lithium-ion secondary battery. In addition, the content of the positive electrode active material in the positive electrode active material layer 14 is not also particularly limited, and is possible if it is within the range applicable to the positive electrode of a typical all-solid-state lithium-ion secondary battery.

In addition, the compound having a coating layer on its surface may be used, or a mixture of the compound described above and a compound having a coating layer may be also used. The coating layer may comprise a coating element compound of oxide or hydroxide of the coating element, oxyhydroxide of the coating element, oxycarbonate of the coating element, or hydroxycarbonate of the coating element. The compound constituting these coating layers may be amorphous or crystalline. The coating element contained in the coating layer may be Mg, Al, Co, K, Na, Ca, Si, Ti, V, Sn, Ge, Ga, B, As, Zr, or a mixture thereof. Specific examples of the coating layer may be $Li_2O$-$ZrO_2$, etc. The coating layer forming process may use any coating method (e.g., spray coating, dipping, etc.), as long as it can be coated in a way that does not adversely affect the properties of the positive electrode active material by using these elements in the compound, and a detailed description thereof will be omitted since it can be well understood by those engaged in the art.

A solid electrolyte which can be further contained in the positive electrode active material layer 14 may be the same as or different from the solid electrolyte contained in the solid electrolyte layer 30 to be described later. Also, the positive electrode active material layer 14 may be one obtained by mixing additives such as an electrically conductive agent, a binder, a filler, a dispersant, or an ion conductive auxiliary agent, as well as the above-described positive electrode active material and solid electrolyte. The electrically conductive agent may be, for example, graphite, carbon black, acetylene black, Ketjen black, carbon fiber, or metal powder. In addition, the binder is mixed with active material and electrically conductive material to bind each component and help the growth of particles, and may be, for example, styrene-butadiene rubber (SBR), polytetrafluoroethylene, polyvinylidene fluoride, or polyethylene. In addition, the filler, the dispersant, the ion conductive auxiliary agent or the like may be a known material typically used for an electrode of an all-solid-state lithium-ion secondary battery. In addition, the positive electrode active material layer 14 may contain the positive electrode active material, the electrically conductive material, and the binder in the form of granules.

(2) Negative electrode

Next, the negative electrode 20 includes the negative electrode active material layer 24 positioned closer to the positive electrode 10 and in contact with the solid electrolyte layer 30, and the negative electrode current collector 22 positioned at the outermost portion, etc., based on the stacking direction, while facing the opposite surface of the negative electrode active material layer 24 that does not contact the solid electrolyte layer 30. In addition, the negative electrode may not include a separate lithium metal, except for the lithium metal formed during charging.

Negative electrode active material layer

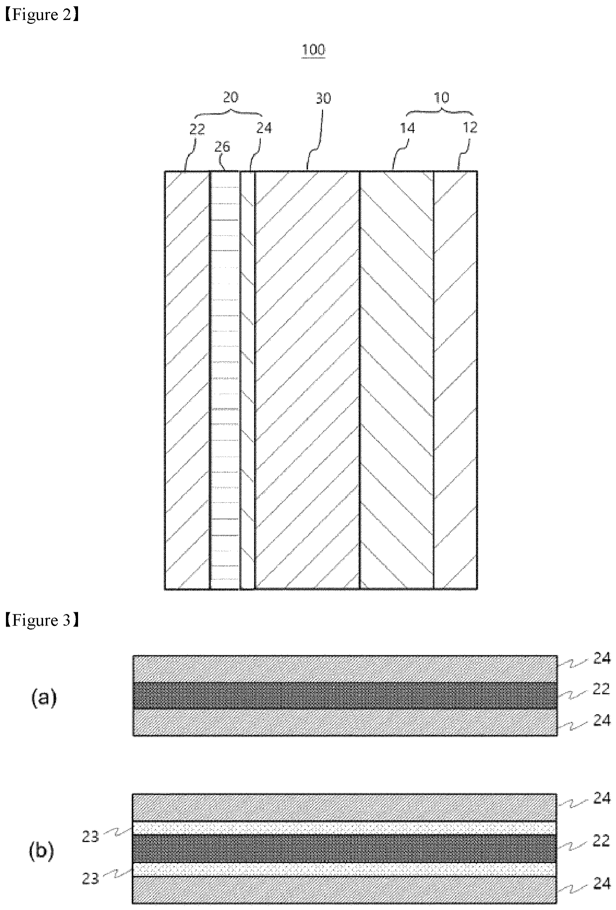

First, the negative electrode active material layer 24 may comprise one type or two or more types of negative electrode active materials capable of forming an alloy or compound with lithium. In the initial state or the state after complete discharging, lithium may not be comprised in the negative electrode current collector 22, in the negative electrode active material layer 24, or between the negative electrode active material layer 24 and the solid electrolyte layer 30. FIG. 2 is a cross-sectional schematic diagram showing the configuration of an all-solid-state lithium-ion secondary battery according to one embodiment of the present invention.

As described below, when the all-solid-state lithium-ion secondary battery 100 according to one embodiment is overcharged, the negative electrode active material included in the negative electrode active material layer 24 and lithium ions moving from the positive electrode 10 may form an alloy or compound, so that, for example, as illustrated in FIG. 2, a metal layer 26 mainly composed of lithium may be formed (precipitated) on the negative electrode 20. The metal layer 26 may be formed by precipitation between the negative electrode current collector 22 and the negative electrode active material layer 24, within the negative electrode active material layer 24, or both. When the metal layer 26 is positioned between the negative electrode current collector 22 and the negative electrode active material layer 24, the metal layer 26 may be formed closer to the negative electrode current collector layer 22 than to the negative electrode active material layer 24.

The negative electrode active material layer 24 according to one embodiment of the present invention may include at least one lithium-friendly material selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide ($SiO_2$), titanium dioxide ($TiO_2$), alumina ($Al_2O_3$), zinc peroxide ($ZnO_2$), and lithium fluoride (LiF), as the negative electrode active material. In addition, among these, it may be more desirable to apply silver (Ag) as a lithium-friendly material. However, it is not limited thereto, and any lithium-friendly material having similar properties or characteristics to these may be applied without particular limitation.

Accordingly, the metal layer 26 formed when overcharging may comprise a Li (lithium-friendly material) alloy comprising a $\gamma1$ phase, a $\beta$Li phase, or a combination thereof in which the lithium-friendly material is solid-dissolved in lithium. Therefore, when discharging, only Li is dissolved in the Li (lithium-friendly material) alloy constituting the metal layer 26, and the solid-dissolved lithium-friendly material remains, so that the occurrence of pores can be suppressed. In this case, the content of the lithium-friendly material in the solid solution of the precipitated Li-lithium-friendly material may be 60% by weight or less. Within this range, the decrease in the average discharging potential due to the influence of the lithium-friendly material can be effectively suppressed. On the other hand, if the content of the lithium-friendly material in the solid solution of the precipitated Li-lithium-friendly material is too low, the amount of the lithium-friendly material remaining during discharging decreases, and it may be difficult to sufficiently suppress the occurrence of pores. For this reason, the content of the lithium-friendly material in the solid solution of the precipitated Li-lithium-friendly material may be 20% by weight or more, for example, 40% by weight or more.

In one embodiment of the present invention, the lithium-friendly material does not necessarily need to be uniformly present in the negative electrode active material layer 24, and may be localized on the side of the negative electrode current collector 22 in the negative electrode active material layer 24. In this case, lithium ions can react with the lithium-friendly material localized layer in the negative electrode active material layer 24 that reaches the vicinity of the negative electrode current collector 22, so that a Li (lithium-friendly material) alloy can be formed as a metal layer 26.

If the content of the lithium-friendly material contained in the negative electrode active material layer 24 is excessively low, since the remaining lithium-friendly material also decreases during discharging, it may be difficult to suppress the occurrence of pores. For this reason, the negative electrode active material layer 24 in the initial state before charging/discharging may contain the lithium-friendly material in an amount of 10% by weight or more, preferably 20% by weight or more, based on 100% by weight of the total negative electrode active material contained in the negative electrode active material layer 24. Meanwhile, in the relationship of the reaction potential between the lithium-friendly material and Li, if the lithium-friendly material is increased, the average discharge potential is decreased and the energy density of the battery may be also decreased. Therefore, from the perspective of high energy density, the upper limit of the content of the lithium-friendly material may be preferably 50 % by weight or less based on 100 % by weight of the total negative electrode active material contained in the negative electrode active material layer 24.

Also, in the negative electrode active material layer 24, if the content of the lithium-friendly material per unit area is excessively low when viewed in the stacking direction of the negative electrode 20, since the lithium-friendly material remaining during discharging is also decreased, it may be difficult to suppress the occurrence of pores. Therefore, the content of lithium-friendly material per unit area in the negative electrode active material layer 24 may be 0.05 $mg/cm^2$ or more, preferably 0.10 $mg/cm^2$ or more. On the other hand, if the content of lithium-friendly material per unit area is too high, since the average discharging potential is lowered, the energy density of the battery may be reduced. Therefore, the upper limit of the content of the lithium-friendly material per unit area may be 5 $mg/cm^2$ or less, preferably 2 $mg/cm^2$ or less.

In addition, the lithium-friendly material included in the negative electrode active material layer 24 in the initial state where charging/discharging is not performed may be in a particle phase or a film phase. If the lithium-friendly material exists in a particle phase, the average particle diameter (d50, diameter length or average diameter) of the lithium-friendly material may be, but is not limited to, 20 nm to 1 $\mu$m.

Meanwhile, the negative electrode active material layer 24 may contain a carbon material as the negative electrode active material in addition to the lithium-friendly material. As the carbon material contained in the negative electrode active material layer 24, amorphous carbon may be preferably used. Specific examples of the amorphous carbon may be amorphous carbon black (amorphous acetylene black, amorphous furnace black, amorphous Ketjen black), amorphous activated carbon, amorphous graphene, and combinations thereof. However, by positioning a carbon material having a relatively small particle size on the interface side that comes into contact with the solid electrolyte layer 30 even in the negative electrode active material layer 24, the interface of the negative electrode active material layer 24 that comes into contact with the solid electrolyte layer 30 can be made flatter. The content of the negative electrode active material other than the lithium-friendly material may be a total of 50% by weight or more, for example, 70% by weight or more, based on 100% by weight of the total negative electrode active material contained in the negative electrode active material layer 24. The content of negative electrode active material other than the lithium-friendly material can be measured using the same method as the method for measuring the content of the lithium-friendly material.

In addition, the carbon material contained in the negative electrode active material layer 24 may contain oxygen. More specifically, the carbon material particles constituting the carbon material may contain 2 to 10 at% of oxygen. If the oxygen is contained in the range of 2 to 10 at%, the surface roughness of the negative electrode active material layer and the operating characteristics of the battery can be further improved. In one embodiment of the present invention, the oxygen may be present in a form contained in a functional group bonded to carbon material particles. In addition, the functional group may comprise at least one selected from the group consisting of a carboxyl group, a hydroxyl group, an ether group, an ester group, an aldehyde group, a carbonyl group, and an amide group.

The carbon material particles containing the oxygen in an amount of 2 to 10 at% can be prepared, for example, by a method of oxidizing the carbon material. For example, the carbon material can be treated with an acid, stirred and reacted at a temperature of 25 to 60°C to introduce oxygen functional groups to the surface of the carbon material. The type of the acid is not particularly limited, and any acid that can introduce oxygen functional groups to the surface of the carbon material can be used. Examples of the acid include sulfuric acid, nitric acid, or mixtures thereof, and an oxidizing agent such as potassium permanganate can also be used.

The content of oxygen contained in the carbon material particles can be measured using a photoelectron spectroscopy (XPS or ESCA). For example, it can be measured using a K-Alpha (Thermo Fisher Scientific) device. In one embodiment of the present invention, the oxygen may be present on the surface of the carbon material particles. The surface does not mean only the outer surface of the carbon material particles, but also includes, for example, the inner surface of pores if the pores are present.

Also, as described above, if the carbon material contains oxygen, the negative electrode active material layer 24 may contain 2 to 10 at% of oxygen, 65 to 85 at% of carbon, and 0.5 to 5 at% of Ag, and preferably may contain 2.5 to 5 at% of oxygen, 74 to 85 at% of carbon, and 0.5 to 3 at% of Ag. Also, in addition to this, the negative electrode active material layer 24 may further contain 5 to 25 at%, preferably 10 to 20 at%, of fluorine (F). In addition, the negative electrode active material layer 24 may further contain 0.01 to 1 at%, preferably 0.01 to 0.5 at%, of sulfur (S). In one embodiment of the present invention, the negative electrode active material layer 24 may contain 2 to 10 at% of oxygen, 65 to 85 at% of carbon, 0.5 to 5 at% of silver, and 5 to 25 at% of fluorine, preferably 2.5 to 5 at% of oxygen, 74 to 85 at% of carbon, 0.5 to 3 at% of silver, and 10 to 20 at% of fluorine, and in addition to these, may additionally contain sulfur. The atomic composition ratio as described above can be measured using a photoelectron spectroscopy (XPS or ESCA). For example, the composition ratio can be measured using a Nexsa4 (Thermo Fisher Scientific) device.

Meanwhile, the negative electrode active material layer 24 may further contain a binder for the purpose of stabilizing the negative electrode active material layer 24 on the negative electrode current collector 22. The binder may be, for example, a resin such as styrene butadiene rubber (SBR), polytetrafluoroethylene, polyvinylidene fluoride, or polyethylene. In addition, in the negative electrode active material layer 24, additives used in a typical all-solid-state battery, such as a filler, a dispersant, and an ion conductive assistant, can be appropriately mixed. Specific examples of the additives are the same as those described in the positive electrode section mentioned above.

The total thickness of the negative electrode active material layer 24 is not particularly limited and may be, for example, 1 to 100 $\mu$m. If the thickness of the negative electrode active material layer 24 is less than 1 $\mu$m, the performance of the all-solid-state battery may not be sufficient. In addition, if the thickness of the negative electrode active material layer 24 exceeds 100 $\mu$m, the resistance of the negative electrode active material layer 24 increases, and as a result, the performance of the all-solid-state battery may not be sufficient. For reference, if the binder mentioned above is used, the thickness of the negative electrode active material layer 24 can be easily secured at an appropriate level.

Negative electrode current collector

The negative electrode current collector 22 may be positioned at the outermost side based on the stacking direction while facing the opposite side of the negative electrode active material layer 24 that does not contact the solid electrolyte layer 30, as shown in FIG. 1. However, if the battery comprises a structure of more than a bi-cell, it may be positioned at a location other than the outermost side based on the stacking direction.

The negative electrode current collector 22 may be in a plate shape or a foil shape. The negative electrode current collector 22 may comprise a material that does not react with lithium, that is, does not form any one of an alloy and compound with lithium. The material constituting the negative electrode current collector 22 may be, for example, copper, aluminum, stainless steel, titanium, iron, cobalt, nickel and the like. In addition, the negative electrode current collector 22 may be composed of one of these metals, or may be composed of an alloy or a clad (coating) material of two or more of these metals.

FIG. 3 is a side cross-sectional schematic diagram showing the laminated structures of a negative electrode current collector (a) included in a conventional anodeless all-solid-state battery and a negative electrode current collector (b) included in an all-solid-state battery according to an example of the present invention. Meanwhile, the negative electrode current collector of the present invention, as illustrated in FIG. 3, includes the base material described above and the lithium-friendly layer positioned on the surface of the base material. That is, while a conventional anodeless all-solid-state battery, as shown in FIG. 3A, has a negative electrode current collector 22 and a negative electrode active material layer 24 facing each other and in contact with each other, the present invention also comprises a lithium-friendly layer 23 located between the negative electrode current collector (or base material, 22) and the negative electrode active material layer 24, as shown in FIG. 3B.

In addition, if the all-solid-state battery comprises a bi-cell structure, the lithium-friendly layer 23 can be located on both sides of the negative electrode current collector as shown in FIG. 3B. On the other hand, if the all-solid-state battery comprises only a mono-cell structure, the lithium-friendly layer 23 can be located only on one side of the negative electrode current collector (more precisely, on one side of the negative electrode current collector in the direction of the negative electrode active material layer).

The lithium-friendly layer 23 is a surface treatment layer of the negative electrode current collector containing the lithium-friendly material (i.e., a material capable of forming an alloy by reacting with lithium). In addition, the lithium-friendly material may be at least one selected from the group consisting of silicon dioxide ($SiO_2$), titanium dioxide ($TiO_2$), alumina ($Al_2O_3$), zinc peroxide ($ZnO_2$), and lithium fluoride (LiF). The lithium-friendly layer 23 may be a material capable of surface treatment, such as deposition by a method selected from the group consisting of an atomic layer deposition (ALD) method, a sputtering method, and a plasma treatment method.

In addition, the lithium-friendly layer 23 may additionally contain, if necessary, one or more of silver (Ag), gold (Au), zinc oxide (ZnO), cobalt oxide (CoO), manganese monoxide (MnO), and other materials that can exhibit similar or identical effects to these. In addition, the lithium-friendly layer 23 may also contain a material that can react with lithium to form a compound. Examples of the materials capable of forming compounds by reacting with lithium may be carbon, titanium sulfide, iron sulfide, and combinations thereof.

As described above, the lithium-friendly material is also contained in the negative electrode active material layer 24. However, as a result of repeated studies from various aspects by the present applicant, it was confirmed that if the negative electrode current collector itself is surface-treated with a lithium-friendly material or a negative electrode active material layer containing a lithium-friendly material is additionally applied and laminated thereon (i.e., the negative electrode active material layer can be omitted in the present invention), since lithium plating on the current collector is uniformly performed even during fast charging, the capacity retention rate of the fast charging cycle of a battery (particularly, a sulfide-based all-solid-state battery) is significantly improved, as compared to the conventional case of simply applying and laminating a negative electrode active material layer containing a lithium-friendly material to a negative electrode current collector. That is, the lithium-friendly layer 23 can be utilized as a layer that causes lithium metal to be evenly precipitated on the surface side of the negative electrode current collector, for example, a wetting layer and the like.

The lithium-friendly material contained in the lithium-friendly layer 23 may have an average particle diameter (D50) of 10 nm to 50 $\mu$m, preferably 10 nm to 20 $\mu$m. If the average particle size (D50) of the lithium-friendly material particles is less than 10 nm, since the particle size is excessively small, a problem of agglomeration between particles may occur. In addition, if the average particle diameter (D50) of the lithium-friendly material particles exceeds 50 $\mu$m , since the

surface area of the particles is small, the alloying reaction with lithium may not proceed smoothly.

The thickness of the lithium-friendly layer 23 may be 1 to 500 nm, preferably 10 to 400 nm, and more preferably 50 to 300 nm, based on the thickness of the negative electrode current collector (or, base material) of 1 to 30 $\mu$m. If the thickness of the lithium-friendly layer is less than 1 nm based on the thickness of the negative electrode current collector of 1 to 30 $\mu$m, it may be difficult to suppress the occurrence of pores because the lithium-friendly material remaining during discharging is also decreased. In addition, if the thickness of the lithium-friendly layer exceeds 500 nm based on the thickness of the negative electrode current collector of 1 to 30 $\mu$m, the cell efficiency may be decreased, and thus the energy density may be decreased. In addition, it may be desirable for the lithium-friendly layer 23 to be formed flat on the negative electrode current collector to prevent the battery from cracking during the charging cycle.

In addition, the thickness ratio of the lithium-friendly layer 23 and the negative electrode active material layer 24 also affects the lithium plating reaction for the current collector. The thickness ratio of the lithium-friendly layer 23 and the negative electrode active material layer 24 may be 1:20 to 500, preferably 1:30 to 200. In particular, if the thickness of the lithium-friendly layer is excessively thin beyond the above range, there may be a problem that it cannot play its role as a lithium-friendly layer.

Meanwhile, the lithium-friendly layer 23 may also be composed of multiple layers of two or more layers. At this time, each layer contains the lithium-friendly material described above, and different lithium-friendly materials may be positioned in each layer, or the same lithium-friendly material may be positioned in each layer. For example, if the lithium-friendly layer 23 is composed of two layers, the lithium-friendly layer located on the side of the base material may contain lithium fluoride (LiF), and the lithium-friendly layer located on the side of the negative electrode active material layer may contain titanium dioxide ($TiO_2$) or lithium fluoride (LiF). At this time, there is no particular limitation on the thickness ratio between layers.

(3) Solid electrolyte layer

The solid electrolyte layer 30 is disposed between the positive electrode 10 and the negative electrode 20 (e.g., between the positive electrode active material layer 14 and the negative electrode active material layer 24), and comprises a solid electrolyte capable of transporting ions. The solid electrolyte may comprise at least one selected from a sulfide-based solid electrolyte, a polymer-based solid electrolyte, and an oxide-based solid electrolyte, and it may be preferable to comprise only a sulfide-based solid electrolyte.

The sulfide-based solid electrolyte may comprise $Li_2S-P_2S_5$, $Li_2S-P_2S_5-LiX$ (X=halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is one of Ge, Zn, or Ga), $Li_2S-GeS_2$, $Li_2S-SiS_2-Li_3PO_4$, $Li_2S-SiS_2-Li_pMO_q$ (p and q are positive numbers, and M is one of P, Si, Ge, B, Al, Ga or In), or a combination thereof. In addition, the sulfide-based solid electrolyte may comprise a solid electrolyte represented by Formula 1 below:

$$[\text{Formula 1}] \qquad Li_xM'_yPS_zA_w$$

wherein, x, y, z, and w are each independently 0 or more and 6 or less; M' is at least one selected from As, Ge, Ga, Sb, Si, Sn, Al, In, Ti, V, Nb and Ta; and A is at least one selected from F, Cl, Br, and I.

Also, as a solid electrolyte, one containing sulfur (S), phosphorus (P), and lithium (Li) as constituent elements among the sulfide-based solid electrolyte materials may be used. For example, one containing $Li_2S-P_2S_5$ may be used. When using one containing $Li_2S-P_2S_5$ as the sulfide-based solid electrolyte material, the mixing molar ratio of $Li_2S$ and $P_2S_5$ may be selected, for example, in the range of $Li_2S:P_2S_5 = 50:50$ to $90:10$. In addition, the solid electrolyte may be in an amorphous state or in a crystalline state, and may also be in a mixture of amorphous and crystalline states. In addition, the solid electrolyte layer 30 may further comprise a binder. The binder may be, for example, a resin such as styrene-butadiene rubber (SBR), polytetrafluoroethylene, polyvinylidene fluoride, polyethylene, or polyacrylic acid. In addition, the binder may be the same as or different from the binder that may be contained in each of the positive electrode active material layer 14 and the negative electrode active material layer 24.

Initial charging capacity ratio

Meanwhile, in the all-solid-state lithium-ion secondary battery 100 according to one embodiment, the initial charging capacity of the positive electrode active material layer 14 may be configured to be excessively large relative to the initial charging capacity of the negative electrode active material layer 24. As described below, the all-solid-state lithium-ion secondary battery 100 according to one embodiment can be used by charging (i.e., overcharging) exceeding the initial charging capacity of the negative electrode active material layer 24. At the beginning of charging, lithium can be intercalated into the negative electrode active material layer 24. That is, the negative electrode active material can form an alloy or compound with lithium ions that have moved from the positive electrode 10. If the charging is performed exceeding the initial charging capacity of the negative electrode active material layer 24, lithium may be precipitated on the back surface of the negative electrode active material layer 24, that is, between the negative electrode current collector 22 and the negative electrode active material layer 24, so that a metal layer 26 may be formed by the lithium, as illustrated in FIG. 2. The metal layer 26 can be mainly composed of lithium (i.e., the solid solution of lithium-friendly material-Li) in which the lithium-friendly material is solid-dissolved. This phenomenon can be composed of a lithium-friendly material contained in the negative electrode, for example, a material that forms an alloy or compound with lithium. During discharging, lithium in the negative electrode active material layer 24 and the metal layer 26 can be ionized and move to the side of the positive electrode 10 while leaving the solid-dissolved lithium-friendly material remaining. Therefore, in the all-solid-state lithium-ion secondary battery 100, lithium can be used as a negative electrode active material. In addition, since the lithium-friendly layer 23 and the negative electrode active material layer 24 simultaneously coat the metal layer 26, they function as a protective layer for the metal layer 26 and can suppress the precipitation and growth of dendritic metal lithium. In this way, the short circuit and capacity reduction of the all-solid-state lithium-ion secondary battery 100 can be suppressed, and further, the characteristics of the all-solid-state lithium-ion secondary battery 100 can be improved. In addition, according to one embodiment, since the metal layer 26 is not formed in advance, there is also an advantage that can reduce the manufacturing cost of the all-solid-state lithium-ion secondary battery 100.

In the all-solid-state lithium-ion secondary battery 100 according to one embodiment, it is preferable that the ratio (b+c/a) of the initial charging capacity of the positive electrode active material layer 14 to the initial charging capacity of the negative electrode active material layer 24 and the lithium-friendly layer 23 satisfies the Equation below.

[Equation 1]

$$0.01 < \ b+c/a \ < \ 0.5$$

wherein a is the initial charging capacity (mAh) of the positive electrode active material layer 14, b is the initial charging capacity (mAh) of the negative electrode active material layer 24, and c is the initial charging capacity (mAh) of the lithium-friendly layer 23.

In that case, if the ratio of the initial charging capacity is 0.01 or less, the lithium-friendly layer 23 and the negative electrode active material layer 24 do not function sufficiently as a protective layer, so that the characteristics of the all-solid-state lithium-ion secondary battery 100 may be deteriorated. For example, if the thickness of the lithium-friendly layer 23 and the negative electrode active material layer 24 is very thin, the capacity ratio may become 0.01 or less. In that case, there is a concern that by repeated charging/discharging, the lithium-friendly layer 23 and the negative electrode active material layer 24 collapse, and dendritic metallic lithium is precipitated and grown. As a result, the characteristics of the all-solid-state lithium-ion secondary battery 100 may be degraded. On the other hand, if the ratio of the initial charging capacity is 0.5 or more, the battery capacity may be decreased because the amount of lithium precipitation at the negative electrode is decreased.

Manufacturing method of all-solid-state lithium-ion secondary battery

Next, a method of manufacturing the all-solid-state lithium-ion secondary battery 100 will be described. The all-solid-state lithium-ion secondary battery 100 according to an embodiment can be obtained by manufacturing the positive electrode 10, the negative electrode 20, and the solid electrolyte layer 30, respectively, and then stacking them.

First, in the positive electrode manufacturing process, materials (the positive electrode active material, the binder, etc.) constituting the positive electrode active material layer 14 are added to a nonpolar solvent to prepare a slurry (or paste), and then the prepared slurry is applied onto a positive electrode current collector 12 and dried to obtain a laminate. Then, the laminate can be pressurized, for example, with hydrostatic pressure, etc., to manufacture a positive electrode 10. At this time, the pressurizing process can be omitted.

Next, in the negative electrode manufacturing process, materials (the negative electrode active material including the carbon material and the lithium-friendly material, the binder, etc.) constituting the negative electrode active material layer 24 are added to a polar solvent or a non-polar solvent to prepare a slurry (or paste), and then the prepared slurry is applied onto a negative electrode current collector 22 whose surface is treated with a lithium-friendly material, and then dried to obtain a laminate (provided that it may be composed of only a negative electrode current collector whose surface is treated with a lithium-friendly material without a negative electrode active material layer). In that case, the process of surface-treating the negative electrode current collector with the lithium-friendly material can be performed by a method selected from the group consisting of an atomic layer deposition method, a sputtering method, and a plasma method. Then, the laminate can be pressurized, for example, with hydrostatic pressure, etc., to manufacture a negative electrode 20. At this time, the pressurizing process can be omitted. In addition, the method of applying the slurry to the negative electrode current collector 22 is not particularly limited, and for example, may be a screen-printing method, a metal mask printing method, an electrostatic coating method, a dip coating method, a spray coating method, a roll coating method, a doctor blade method, a gravure coating method, and the like.

In addition, the solid electrolyte layer 30 may be made of, for example, a solid electrolyte including a sulfide-based solid electrolyte material. First, a starting material (e.g., $Li_2S$, $P_2S_5$, etc.) is treated by a melt quenching method or a mechanical milling method to obtain a sulfide-based solid electrolyte material. For example, when the melt quenching method is used, the starting materials are mixed in a predetermined amount, and obtained mixture is pelletized, reacted in a vacuum at a predetermined reaction temperature, and then quenched to prepare a sulfide-based solid electrolyte material. In addition, the reaction temperature of the mixture of $Li_2S$ and $P_2S_5$ may be 400 °C ~ 1000 °C, for example, 800 °C ~ 900 °C. In addition, the reaction time may be 0.1 hours to 12 hours, for example, 1 hour to 12 hours. In addition, the quenching temperature of the reactant may be 10 °C or less, for example, 0 °C or less, and the quenching rate may be usually 1 °C/sec to 10000 °C/sec, for example, 1 °C/sec to 1000 °C/sec. In addition, when a mechanical milling method is used, the starting materials are stirred and reacted using a ball mill or the like to prepare a sulfide-based solid electrolyte material. In addition, the stirring speed and stirring time in the mechanical milling method are not particularly limited, but the faster the stirring speed, the faster the production rate of the sulfide-based solid electrolyte material, and the longer the stirring time, the higher the conversion rate of the raw material to the sulfide-based solid electrolyte material.

Thereafter, the obtained mixed raw material (the sulfide-based solid electrolyte material) is heat-treated at a predetermined temperature, and then it is pulverized to prepare a particle-shaped solid electrolyte. If the solid electrolyte has a glass transition point, it may be changed from amorphous to crystalline by heat treatment. Then, the solid electrolyte obtained by the above method can be formed into a film using a known film forming method, for example, an aerosol position method, a cold spray method, or a sputtering method, to prepare the solid electrolyte layer 30. Also, the solid electrolyte layer 30 may be manufactured by pressing solid electrolyte particles. In addition, the solid electrolyte layer 30 may be prepared by mixing a solid electrolyte, a solvent, and a binder, applying the mixture, and drying and pressing the same.

Finally, the solid electrolyte layer 30 is disposed between the manufactured positive electrode 10 and the negative electrode 20, and is pressurized using, for example, hydrostatic pressure to manufacture an all-solid-state lithium-ion secondary battery 100 according to an embodiment.

The all-solid-state lithium-ion secondary battery 100 of the present invention can be manufactured as a unit cell having a structure of positive electrode/separator/negative electrode, a bi-cell having a structure of positive electrode/separator/negative electrode/separator/positive electrode, or a laminated battery structure in which the structure of the unit cells is repeated. In addition, the all-solid-state lithium-ion secondary battery according to the present invention can be utilized as a semi-solid battery comprising even a liquid electrolyte if necessary, and in this case, a separate polymer separator can be further comprised.

The shape of the all-solid-state lithium-ion secondary battery 100 of the present invention is not particularly limited, and for example, may be exemplified as a coin type, a button type, a sheet type, a stacked type, a cylindrical shape, a flat type, a horn type, etc. Also, it can be applied even to large batteries used in electric vehicles, etc. For example, the all-solid-state lithium-ion secondary battery 100 can also be used in hybrid vehicles such as plug-in hybrid electric vehicle (PHEV). In addition, it can be used even in fields requiring a large amount of power storage, for example, for an electric bicycle or a power tool.

Hereinafter, preferred examples are presented to help understand the present invention, but these are only illustrative of the present invention, and it will be apparent to those skilled in the art that various changes and modifications are possible within the scope and technical idea of the present invention, and it is also natural that such changes and modifications fall within the scope of the appended patent claims.

[Manufacturing Example 1] Manufacturing of negative electrode for all-solid-state battery

First, lithium fluoride (LiF) as a lithium-friendly material was applied onto the surface of a negative electrode current collector (SUS foil, thickness: 10 μm) and dried using the atomic layer deposition method to manufacture a negative electrode current collector comprising a lithium-friendly layer formed with a thickness of 50 nm.

Separately from the above, 6 g of amorphous carbon black, 2 g of Ag, 9.33 g of PVdF binder (solid content 6%), and 7.67 g of NMP solution were placed in a Thinky mixer container and mixed 12 times for 3 minutes each at 2,000 rpm. Thereafter, 5 g of NMP solution was additionally added and mixed 5 times for 3 minutes each at 2,000 rpm to prepare a slurry for the negative electrode active material.

Thereafter, the slurry for the manufactured negative electrode active material was applied to the surface of the lithium-friendly layer of the negative electrode current collector by using a spray coating method, and then dried to obtain a laminate. Subsequently, the laminate was pressurized with hydrostatic pressure to manufacture a negative electrode for an all-solid-state battery.

[Comparative Manufacturing Example 1] Manufacturing of negative electrode for all-solid-state battery

A negative electrode for an all-solid-state battery was manufactured in the same manner as in the Manufacturing Example 1, except that the lithium-friendly layer was not formed on the surface of the negative electrode current collector (i.e., a conventional bare SUS foil was applied as the negative electrode current collector).

[Example 1, Comparative Example 1] Manufacturing of all-solid-state lithium-ion secondary battery

As a positive electrode, a positive electrode formed by loading a positive electrode active material (lithium transition metal oxide) to an aluminum current collector at 5.5 mAh/cm$^2$ was used, and as a negative electrode, the negative electrodes manufactured in the Manufacturing Example 1 and Comparative Manufacturing Example 1 were used, respectively, and as an electrolyte, a sulfide-based solid electrolyte ($Li_2S$-$P_2S_5$) was used to manufacture a sulfide-based all-solid-state battery of Example 1 and Comparative Example 1.

[Experimental Example] Evaluation of fast charging performance of battery

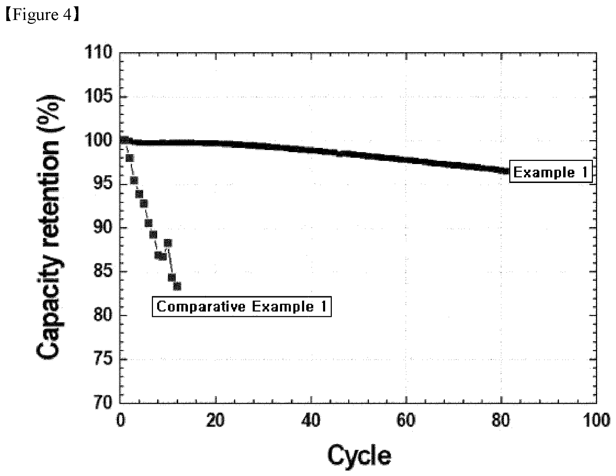

Each of the sulfide-based all-solid-state batteries of the Example 1 and Comparative Example 1 was driven under the following charging/discharging conditions at an operating voltage range of 4.25 V to 3.0 V and an operating temperature of 60°C to evaluate the capacity retention rates depending on the charging/discharging cycles, and the results are shown in FIG. 4.

- Charging condition: 2C, 4.25V CC/CV, 0.1C cut-off
- Discharging condition: 0.33C, 3.0V, CC

FIG. 4 is a graph showing the capacity retention rates depending on the charging/discharging cycles of the batteries according to an Example of the present invention and a Comparative Example. As a result of evaluating the capacity retention rate depending on the charging/discharging cycles for the sulfide-based all-solid-state batteries of the Example 1 and Comparative Example 1, the battery of Example 1, in which the lithium-friendly layer was formed on the surface of the negative electrode current collector, exhibited a high-capacity retention rate exceeding 95% even after 80 charging/discharging cycles, as shown in FIG. 4. On the other hand, it was confirmed that the battery of Comparative Example 1, which used a conventional negative electrode current collector in which the lithium-friendly layer was not formed, exhibited a rapid decrease in capacity retention rate from the time of the initial charging/discharging.
These results are attributed to the fact that the lithium-friendly material located on the surface of the negative electrode current collector induced a uniform lithium plating reaction on the current collector, and through this, it can be seen that simply incorporating the lithium-friendly material into the negative electrode active material layer has limitations in improving the fast-charging performance.

**Claims**

1. An all-solid-state lithium-ion secondary battery, comprising a positive electrode, a solid electrolyte layer, a negative electrode current collector and a negative electrode active material layer disposed between the solid electrolyte layer and the negative electrode current collector,
   wherein the negative electrode current collector comprises a base material; and a lithium-friendly layer located on a surface of the base material.

2. The all-solid-state lithium-ion secondary battery according to claim 1, wherein the lithium-friendly layer includes a lithium-friendly material that reacts with lithium to form an alloy or compound.

3. The all-solid-state lithium-ion secondary battery according to claim 2, wherein the lithium-friendly material that reacts with the lithium to form an alloy is selected from the group consisting of silicon dioxide ($SiO_2$), titanium dioxide ($TiO_2$), alumina ($Al_2O_3$), zinc peroxide ($ZnO_2$), and lithium fluoride (LiF).

4. The all-solid-state lithium-ion secondary battery according to claim 1, wherein the thickness of the lithium-friendly layer is 1 to 500 nm based on the thickness of the base material of 1 to 30 $\mu$m.

5. The all-solid-state lithium-ion secondary battery according to claim 1, wherein the thickness ratio of the lithium-friendly layer and the negative electrode active material layer is 1:20 to 500.

6. The all-solid-state lithium-ion secondary battery according to claim 2, wherein the lithium-friendly material that reacts with lithium to form an alloy has an average particle diameter (D50) of 10 nm to 50 $\mu$m.

7. The all-solid-state lithium-ion secondary battery according to claim 1, wherein the negative electrode does not contain any separate lithium metal, except for the lithium metal formed during charging.

8. The all-solid-state lithium-ion secondary battery according to claim 3, wherein the lithium-friendly layer further comprises at least one selected from the group consisting of silver (Ag), gold (Au), zinc oxide (ZnO), cobalt oxide (CoO), and manganese monoxide (MnO).

9. The all-solid-state lithium-ion secondary battery according to claim 2, wherein the lithium-friendly material which reacts with the lithium to form a compound is selected from the group consisting of carbon, titanium sulfide, iron sulfide and combinations thereof.

10. The all-solid-state lithium-ion secondary battery according to claim 2, wherein the lithium-friendly layer is composed of multiple layers, and the lithium-friendly materials contained in each layer are of the same or different types.

11. The all-solid-state lithium-ion secondary battery according to claim 1, wherein the negative electrode active material layer includes at least one lithium-friendly material selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide ($SiO_2$), titanium dioxide ($TiO_2$), alumina ($Al_2O_3$), zinc peroxide ($ZnO_2$), and lithium fluoride (LiF).

12. The all-solid-state lithium-ion secondary battery according to claim 11, wherein the negative electrode active material contains silver (Ag).

【Figure 1】

【Figure 2】

【Figure 3】

【Figure 4】

# INTERNATIONAL SEARCH REPORT

| International application No. |
|---|
| **PCT/KR2024/018282** |

| A. | CLASSIFICATION OF SUBJECT MATTER |
|---|---|

**H01M 10/0585**(2010.01)i; **H01M 4/66**(2006.01)i; **H01M 4/13**(2010.01)i; **H01M 4/38**(2006.01)i; **H01M 10/0525**(2010.01)i; **H01M 10/0562**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/0585(2010.01); H01M 10/052(2010.01); H01M 10/058(2010.01); H01M 10/42(2006.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 친화(lithium-philic), 전고체(all solid), 활물질(active material), 음극(negative electrode)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0069150 A (SAMSUNG ELECTRONICS CO., LTD.) 27 May 2022 (2022-05-27)<br>See paragraphs [0003] and [0039]-[0125], claim 11 and figure 1a. | 1,2,4,5-7,11,12 |
| Y | | 3,8-10 |
| Y | CN 116247277 A (INSTITUTE OF PHYSICS, CHINESE ACADEMY OF SCIENCES) 09 June 2023 (2023-06-09)<br>See paragraphs [0042], [0103] and [0116]. | 3,8-10 |
| A | KR 10-2022-0011408 A (LG ENERGY SOLUTION, LTD.) 28 January 2022 (2022-01-28)<br>See paragraphs [0062]-[0064]. | 1-12 |
| A | KR 10-2022-0047106 A (LG ENERGY SOLUTION, LTD.) 15 April 2022 (2022-04-15)<br>See paragraphs [0058] and [0060]. | 1-12 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2025** | **19 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/018282** |

### C.   DOCUMENTS CONSIDERED TO BE RELEVANT

| Category* | Citation of document, with indication, where appropriate, of the relevant passages | Relevant to claim No. |
|---|---|---|
| A | KR 10-2020-0113338 A (KOREA ELECTRONICS TECHNOLOGY INSTITUTE) 07 October 2020 (2020-10-07)<br>       See paragraphs [0024]-[0026]. | 1-12 |

### INTERNATIONAL SEARCH REPORT
### Information on patent family members

International application No.

**PCT/KR2024/018282**

| Patent document cited in search report | | | Publication date (day/month/year) | Patent family member(s) | | | Publication date (day/month/year) |
|---|---|---|---|---|---|---|---|
| KR | 10-2022-0069150 | A | 27 May 2022 | EP | 4002517 | A1 | 25 May 2022 |
| | | | | EP | 4002517 | B1 | 24 April 2024 |
| | | | | US | 2022-0158226 | A1 | 19 May 2022 |
| CN | 116247277 | A | 09 June 2023 | None | | | |
| KR | 10-2022-0011408 | A | 28 January 2022 | CN | 115298851 | A | 04 November 2022 |
| | | | | EP | 4177984 | A1 | 10 May 2023 |
| | | | | JP | 2023-524699 | A | 13 June 2023 |
| | | | | JP | 7562208 | B2 | 07 October 2024 |
| | | | | KR | 10-2022-0005334 | A | 13 January 2022 |
| | | | | KR | 10-2022-0010688 | A | 26 January 2022 |
| | | | | US | 2023-0290956 | A1 | 14 September 2023 |
| | | | | WO | 2022-010211 | A1 | 13 January 2022 |
| KR | 10-2022-0047106 | A | 15 April 2022 | CN | 116210103 | A | 02 June 2023 |
| | | | | EP | 4220750 | A1 | 02 August 2023 |
| | | | | JP | 2023-543201 | A | 13 October 2023 |
| | | | | JP | 7621711 | B2 | 27 January 2025 |
| | | | | KR | 10-2022-0040179 | A | 30 March 2022 |
| | | | | US | 2023-0378531 | A1 | 23 November 2023 |
| | | | | WO | 2022-065813 | A1 | 31 March 2022 |
| KR | 10-2020-0113338 | A | 07 October 2020 | None | | | |

Form PCT/ISA/210 (patent family annex) (July 2022)

**EP 4 668 406 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230167861